Europäisches Patentamt

European Patent Office

Office européen des brevets

(19)

(11) Numéro de publication: **0 142 137**

**A2**

(12)

# DEMANDE DE BREVET EUROPEEN

(21) Numéro de dépôt: 84113520.5

(22) Date de dépôt: 09.11.84

(51) Int. Cl.⁴: **H 04 M 19/08**

(30) Priorité: 15.11.83 FR 8318142

(43) Date de publication de la demande:
22.05.85 Bulletin 85/21

(84) Etats contractants désignés:
AT CH DE GB IT LI SE

(71) Demandeur: Groupement d'Intérêt Economique régi par
l'ordonnance du 23 septembre 1967 dit: GESI
1-5 Avenue Carnot
F-91300 Massy(FR)

(72) Inventeur: Rigault, Claude
8, Allée de la Blancharde Chevry 2
F-91190 Gif-sur-Yvette(FR)

(72) Inventeur: Philippe, Emile
13, Avenue Jeanne d'Arc
F-92160 Antony(FR)

(74) Mandataire: Casalonga, Alain et al,
BUREAU D.A. CASALONGA OFFICE JOSSE & PETIT
Baaderstrasse 12-14
D-8000 München 5(DE)

(54) Alimentation à haute impédance pour circuit électronique alimenté par une ligne de téléphone.

(57) Alimentation à haute impédance pour circuit électronique alimenté par une ligne téléphonique, se branchant en parallèle sur la ligne, consommant moins de 50 microampères dans l'état raccroché de cette ligne et comportant un pont redresseur à diodes (PRD) chargeant un condensateur d'alimentation (C2), caractérisée par le fait que le pont redresseur à diodes (PRD) charge ledit condensateur d'alimentation (C1) par l'intermédiaire d'une résistance modérée (R1) et d'une forte résistance (R2) placées en série, avec en dérivation aux bornes de la forte résistance (R2) un dispositif à transistors (T1 à T4) établissant la dérivation directe sous l'effet d'un signal de commande qui est élaboré par un comparateur à hystérésis (AOP1) sous la dépendance d'un montage potentiométrique (R3, R4) définissant deux seuils (S1 et S2) at établissant la commande (FCC) du dispositif à transistors lorsque la tension du condensateur d'alimentation (C1) est inférieure au premier seuil (S1) et jusqu'à ce qu'elle dépasse le second seuil (S2).

Alimentation à haute impédance pour circuit électronique alimenté par une ligne de téléphone.

---

L'invention concerne les dispositifs d'alimentation de circuits électroniques devant être alimentés par une ligne de téléphone comme par exemple les circuits de comptage de taxe de postes de cabine.

Les alimentations utilisées dans ce but prélèvent leur énergie soit sur une source extérieure, avec les inconvénients que cela comporte, soit sur la ligne téléphonique mais en imposant alors une consommation non négligeable sur cette ligne, ou en s'insérant en série dans la ligne en créant alors une chute de tension qui limite les possibilités des postes téléphoniques qui sont raccordés à cette même ligne, en particulier si les postes sont eux-mêmes équipés de circuits électroniques créant également une chute de tension importante tels que les circuits de clavier.

Le but de l'invention est de réaliser une alimentation à haute impédance qui n'extrait son énergie que de la ligne de téléphone, qui est montée en parallèle sur celle-ci et qui présente trois séquences ou régimes de fonctionnement :

a) Une séquence de "mise en service" qui a lieu au premier raccordement de l'alimentation, dont les réserves d'énergie sont alors vides, à la ligne téléphonique. A la fin de cette séquence, lorsque les tensions fournies deviennent suffisantes, l'alimentation fournit une impulsion dite de "réinitialisation" à l'électronique qu'elle alimente, puis elle retourne au "régime d'entretien".

b) Un régime d'entretien, ligne téléphonique raccrochée, où l'électronique alimentée ne consomme qu'un courant de maintien très faible (par exemple : 25 microampères) et où la consommation de l'alimentation sur la ligne est limitée à une valeur la plus proche possible de ce courant de maintien, tout en gardant un bilan énergétique légèrement positif pour que ses réserves d'énergie ne diminuent pas.

c) Un régime de fonctionnement, ligne décrochée où le prélèvement d'énergie sur la ligne est adaptée à la consommation de l'électronique alimentée.

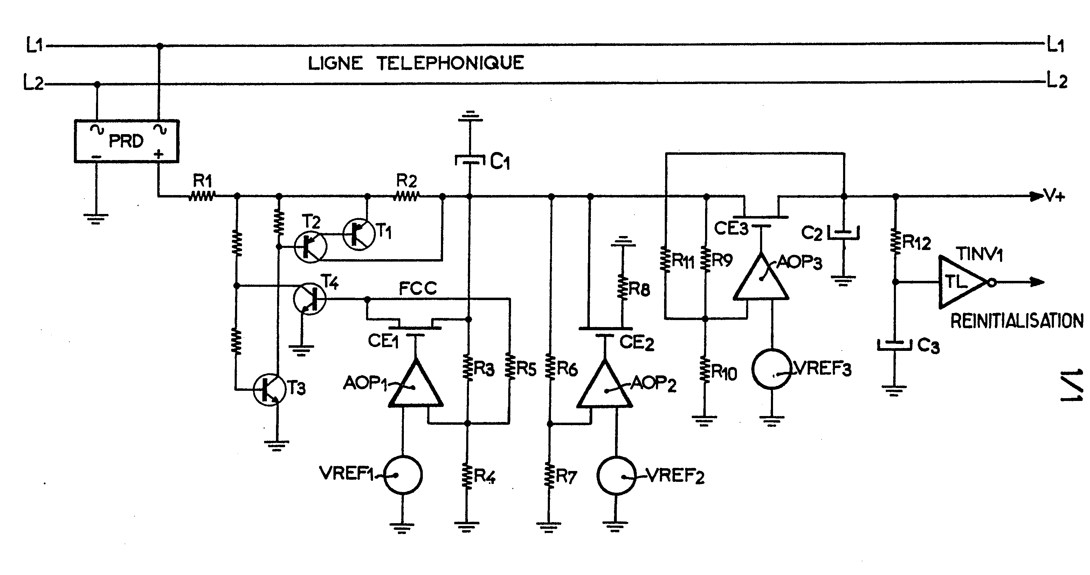

L'invention, illustrée par le schéma de la figure unique, consiste à raccorder en parallèle sur les deux fils de la ligne téléphonique une forte capacité C1 par l'intermédiaire d'un pont redresseur à diode PRD et de deux résistances différentes de limitation du courant de charge montées en série : l'une R1 de valeur modérée (par exemple 360 ohms) et l'autre R2 de très forte valeur (par exemple 1, 8 megohms) mais court circuitable, déterminant ainsi deux régimes de charge différents.

Dans le régime normal, la résistance R2 de très forte valeur n'est pas court-circuitée et l'alimentation ne prélève sur la ligne que le courant d'entretien de quelques microampères de la tension aux bornes de la capacité une fois que celle-ci est chargée.

Dans le régime initial dit de mise en service, la résistance R2 est court-circuitée et l'alimentation prélève sur la ligne un courant d'initialisation important tant qu'un comparateur, constitué d'une référence de tension VREF1, d'un amplificateur opérationnel AOP1 et d'un commutateur électronique CE1 à hystérésis, mesurant la tension aux bornes de la capacité, ne génère pas le signal FCC de "fin de court circuitage" de la résistance R2.

L'entrée de ce comparateur à hystérésis est reliée à la capacité par un dispositif potentiométrique R3, R4 et une résistance d'hystérésis R5 définissant deux seuils, un seuil haut S2 et un seuil bas S1, de manière à fournir ledit signal "fin de court-circuitage" lorsque la tension de la capacité dépasse le seuil haut $S2 = VREF1 (1 + R3/R4)$ et tant qu'elle n'est pas redescendue au-dessous du seuil bas $S1 = VREF1 (1+R3R5/R4(R3+R5))$. Ainsi lorsque la forte capacité C1 n'est pas suffisamment chargée, l'alimentation passe dans un état de charge rapide en abaissant sa résistance par le court-circuitage de R2.

Selon l'invention, un deuxième comparateur, constitué par une référence de tension VREF2, un amplificateur opérationnel AOP2 et un commutateur électronique CE2 définit, grâce au montage potentiométrique R6, R7, un seuil de tension $S3 = VREF1 ( 1+R6/R7)$ supérieur à S2 au-delà duquel la capacité C1 se trouve déchargée par le commutateur CE2 dans la résistance de valeur modérée R8 (par exemple 1Kohm) jusqu'à ce que la tension aux bornes de C1 redescende en dessous du seuil S3. Ainsi la tension aux bornes de la capacité C1 se trouve limitée à la valeur S3.

Selon l'invention un troisième comparateur à l'hytérésis, constitué par une référence de tension VREF3, un amplificateur opérationnel AOP3, un commutateur électronique CE3, un montage potentiométrique R9/R10 et une résistance d'hystérésis R11, définit deux autres seuils $S4=VREF3 (1+R9/R10)$ et S5=VREF3 (1+R9R11/R10(R9+R11)) de la tension aux bornes de la capacité C1 entre lesquels cette tension est commutée vers la capacité C2 et le circuit électronique qu'elle alimente par V+. Le trigger inverseur TINV1, associé aux composants de constante de temps C3 et R12, produit, à la commutation de la tension d'alimentation par CE3, une impulsion de réinitialisation.

Enfin selon l'invention, le circuit de court circuitage de la forte résistance R2 est réalisé par des transistors T1, T2, T3 et T4.

La fonction de court circuitage est réalisée par le montage Darlington de T1 et T2 dont le courant de base est fourni par le transistor T3 normalement passant si T4 est bloqué.

Le signal FCC de "fin de court-circuitage" généré par le premier comparateur à hystérésis débloque T4, qui à son tour bloque T3 et par suite T1 et T2.

Les trois régimes de cette alimentation sont ainsi :

1) le régime de mise en service de l'appareil : pendant la mise en service de l'appareil, la ligne doit être raccrochée et le dispositif AOP2 de surveillance de la charge du condensateur de forte capacité C1 provoque une charge rapide de ce condensateur ainsi que l'impulsion de réinitialisation de l'électronique alimentée. Dès la fin de cette séquence, l'alimentation retourne à son régime d'entretien.

2) Le régime d'entretien, ligne raccrochée : la tension aux bornes L1, L2 du poste est alors de 48 volts. L'électronique alimentée consomme pour son maintien par exemple 25 microampères en permanence. La résistance R2 de 1,8 megohms entretient la charge du condensateur C1 d'alimentation. Le dispositif de limitation CE3 empêche comme indiqué ci-dessus que la tension de charge de la capacité C1 dépasse le seuil S3, par exemple 3,8 volts.

3) Le régime de fonctionnement, ligne décrochée : lorsque la ligne est décrochée, la tension de la ligne descend nominalement à 7 volts. Le bilan énergétique devient négatif en dessous de 4,5 volts. La consommation du circuit électronique alimenté est par exemple de 75 microampères. La résistance R2 ne peut donc maintenir la charge du condensateur C1. La tension du condensateur C1 descend donc lentement au fur et à mesure de l'utilisation de l'énergie accumulée dans ce condensateur, et ceci jusqu'à ce que le seuil bas S1 soit atteint (par exemple 2,9 volts). Alors le dispositif de suveillance AOP1 de la tension du concensateur C1 cesse d'envoyer le signal de fin de court-circuit au dispositif à transistors Tl à T4 qui produit par Tl la mise en dérivation de la résistance forte R2 de manière que le condensateur Cl soit alimenté directement par la résistance faible Rl. Ceci provoque par conséquent pendant un instant relativement court la recharge jusqu'au seuil S2 (par exemple 3,6 volts) par le plus fort régime de charge.

5

REVENDICATIONS

1. Alimentation à haute impédance pour circuit électronique alimenté par la ligne téléphonique se montant en parallèle sur les deux fils de ligne (L1, L2) et comportant un pont redresseur à diodes (PRD) chargeant un condensateur (C1) de forte capacité, caractérisée par le fait que le pont à diodes (PRD) charge ledit condensateur d'alimentation (C1) par l'intermédiaire d'une résistance modérée (R1) et d'une forte résistance (R2) placées en série, avec en dérivation aux bornes de la forte résistance (R2) un dispositif à transistors (T1 à T4) établissant la dérivation directe sous l'effet d'un signal de commande (FCC) qui est élaboré par un circuit de surveillance constitué par un comparateur (AOP1) sous la dépendance d'un montage potentiométrique (R3, R4) et d'une résistance d'hystérésis (R5) définissant deux seuils de tension (S1 et S2) et établissant la commande (FCC) d'arrêt du dispositif à transistors lorsque la tension du condensateur d'alimentation (C1) dépasse le second seuil (S2) et tant que cette tension n'est pas tombée au-dessous du premier seuil (S1).

2. Alimentation selon la revendication 1, caractérisée par le fait qu'un dispositif de surveillance, constitué par un second comparateur (AOP2 et un second montage potentiométrique (R6, R7), définit un troisième seuil (S3) à partir duquel ce circuit agit pour décharger le condensateur d'alimentation (C1) tant que la tension de ce condensateur dépasse ledit troisième seuil (S3) de façon à limiter la tension aux bornes de ce condensateur (C1).

3. Alimentation selon l'une des revendications précédentes, caractérisée par le fait qu'elle comporte un troisième comparateur (AOP3) à hystérésis dépendant d'un montage potentiométrique (R9, R10) et d'une résistance d'hystérésis (R11) définissant deux autres seuils bas (S4) et haut (S5) tels que, lorsque le seuil haut (S5) est atteint par la tension aux bornes du condensateur d'alimentation (C1), celui-ci se trouve commuté par un commutateur électronique (CE3) vers le dispositif électronique (V+) qu'il alimente, et qu'une impulsion de réinitialisation de ce dispositif électronique est générée par un circuit trigger inverseur (TINV1) commandé par la montée de cette tension d'alimentation aux bornes d'un condensateur (C3), chargé par une résistance (R12) fixant la constante de temps.

0142137

1/1